# FASCICULE DE BREVET EUROPEEN

(11) **EP 1 025 055 B1**
(45) Date de publication et mention de la délivrance du brevet: **02.05.2002**
(21) Numéro de dépôt: 98950173.9
(22) Date de dépôt: 22.10.1998
(51) Int. Cl.: C03B 35/20, C03B 27/044

(54) **PROCEDE ET DISPOSITIF DE BOMBAGE ET DE TREMPE D'UNE VITRE**
VERFAHREN UND VORRICHTUNG ZUM BIEGEN UND HÄRTEN EINER GLASSCHEIBE
METHOD AND DEVICE FOR CURVING AND TEMPERING A GLASS SHEET

(30) Priorité: 22.10.1997 DE 19746558
(43) Date de publication de la demande: 09.08.2000
(73) Titulaire: SAINT-GOBAIN GLASS FRANCE, 92400 Courbevoie (FR)
(72) Inventeur: KUSTER, Hans-Werner, D-52066 Aachen (DE); DIEDEREN, Werner, D-52134 Herzogenrath (DE); DAHLHOFF, Knut, D-52064 Aachen (DE); OLLFISCH, Karl-Josef, NL-6462 SW Kerkrade (NL); KORSTEN, Wilfried, D-52525 Heinsberg (DE)
(74) Mandataire: Le Cam, Stéphane Georges Elie
(86) Numéro de dépôt international: FR9802256
(87) Numéro de publication internationale: WO9920575

(56) Documents cités:
- EP-A- 0 186 529
- EP-A- 0 400 631
- WO-A-95/32924
- DE-A- 2 945 776
- US-A- 5 118 335

## Description

La présente invention a trait à un procédé de bombage et de trempe d'une vitre dans lequel la vitre portée à la température de bombage est bombée à la forme voulue en position horizontale à l'aide d'un cadre de formage et la surface entière des deux côtés de la vitre bombée est ensuite refroidie brusquement sur le cadre de formage, dans un poste de trempe qui suit le poste de bombage par soufflage d'air froid à l'aide de caissons de soufflage munis de buses soufflantes. L'invention concerne en outre les dispositifs nécessaires à l'exécution de ce procédé.

Les procédés de ce genre sont connus dans diverses formes d'exécution. Dans un tel procédé divulgué par le document DE-C2-2 945 776, la vitre plane à bomber est soulevée à l'aide d'une plaque à ventouses et relâchée sur la forme de bombage placée verticalement sous la vitre, la vitre prenant la forme de la forme de bombage sous l'effet de l'énergie cinétique de la chute. La vitre bombée est amenée dans le poste de trempe avec ce cadre de formage.

Dans le procédé dit de bombage par pressage, tel que révélé par exemple par le document EP-B1-0 005 306, le cadre de formage fait fonction de forme de bombage par pressage à l'aide de laquelle la vitre est pressée contre une forme de bombage supérieure dont toute la surface est convexe. Ensuite, la vitre bombée est ramenée dans le poste de trempe avec ce cadre de formage et est refroidie brusquement sur celui-ci.

Les cadres de formage qui sont utilisés comme cadres de support pour les vitres durant l'opération de trempe doivent être configurés de manière à ne pas entraver le refroidissement brusque indispensable de la zone des bords de la vitre. C'est pourquoi ils sont munis, sur leurs surfaces de support, de saillies, de canaux de circulation ou d'évidements afin que l'air soufflé dirigé vers la face inférieure de la vitre atteigne également la zone des bords de la vitre et provoque le refroidissement brusque nécessaire pour produire la trempe requise. Les cadres de formage pour le soutien de la vitre durant la trempe sont décrits, par exemple, dans les brevets US-A-5 118 335 et EP-B-0 186 529.

Il s'est avéré que les procédés connus du type susmentionné, dans lesquels les vitres sont bombées au moyen d'un seul et même cadre de formage, et sont trempées, posées sur ce cadre de formage, ne permettaient pas toujours d'obtenir des résultats satisfaisants. En fonction de la réalisation du cadre de formage, il peut arriver, par exemple, que la trempe de la vitre réalisable dans la zone des bords soit trop faible ou que, lorsqu'une trempe suffisante est atteinte, l'opération de bombage soit à l'origine de déformations des bords de la vitre qui sont gênantes du point de vue optique. Les déformations gênantes du point de vue optique proviennent principalement des saillies ou des évidements des surfaces de support des cadres de formage qui sont nécessaires pour la circulation de l'air soufflé, et en raison desquels les bords de la vitre sont soumis à des sollicitations inégales. Ces sollicitations inégales sont particulièrement visibles et gênantes lorsque les vitres doivent être chauffées relativement fortement pour obtenir un bombage prononcé et/ou lorsque les bords de la vitre sont munis d'un cadre décoratif opaque en peinture à cuire, de sorte que, du fait de la réflexion accrue, ces déformations, minimes en soi, deviennent particulièrement visibles. Les déformations gênantes du point de vue optique de ce genre se remarquent spécialement lorsque les vitres sont installées sans cadre dans la carrosserie du véhicule automobile, car la zone des bords de la vitre est alors visible jusqu' au bord proprement dit, endroit où les déformations précitées sont, par nature, les plus importantes.

Les déformations gênantes du point de vue optique pourraient certes être évitées, ou tout au moins fortement atténuées, si la surface d'appui pour la vitre sur le cadre de formage était augmentée, par exemple par l'élargissement des saillies de support et/ou la réduction de l'écart entre les saillies de support. Cependant, on se heurte alors à nouveau au problème que la quantité d'air soufflé parvenant à la zone des bords de la vitre est insuffisante, si bien que les degrés de trempe nécessaires ne sont pas atteints.

L'invention a pour but d'améliorer le procédé du type décrit dans le préambule de manière qu'il permette à la fois la fabrication de vitres bombées dont les bords soient exempts de déformations gênantes du point de vue optique et une trempe irréprochable des vitres bombées dans la zone de leurs bords.

Suivant l'invention, ce but est atteint en ce que, durant le refroidissement brusque de la surface entière de la vitre, les zones des bords de la vitre recouvertes par le cadre de formage sont soumises à un soufflage d'air froid supplémentaire par l'amenée adéquate, aux ouvertures traversant le cadre de formage, d'air comprimé se trouvant à une pression accrue par rapport à la pression ambiante qui apparaît entre les caissons de soufflage.

L'amenée adéquate d'air froid supplémentaire, à une pression augmentée, aux zones des bords de la vitre recouvertes, à travers le cadre de formage, permet d'agencer la surface portante du cadre de formage de telle sorte qu' il ne se produise plus de déformations du bord de la vitre du fait de l'action inégale des forces de déformation mécaniques. En particulier, on peut renoncer aux larges canaux de circulation dans le cadre de formage et, au lieu de cela, pourvoir le cadre de formage d'orifices d'un diamètre relativement petit ou le réaliser dans un matériau poreux. L'air comprimé est alors amené à la face inférieure du cadre de formage par un canal de distribution circulaire en veillant simplement à ce que les ouvertures du cadre de formage, d'une part, et le débit volumique et la pression de l'air comprimé, d' autre part, soient mutuellement adaptés de telle sorte que l'effet de refroidissement nécessaire dans les zones recouvertes par le cadre de formage soit atteint.

D'autres particularités et avantages du procédé suivant 1' invention découlent des revendications dépendantes et de la description ci-après d'un exemple de réalisation préféré d'un cadre de formage adapté au procédé suivant l'invention, donnée avec référence aux dessins.

Dans les dessins,
- la Fig. 1: est une vue en perspective d'un cadre de formage suivant l'invention;
- la Fig. 2: illustre un fragment à plus grande échelle (zone II) de la Fig. 1;
- la Fig. 3: est une vue en coupe suivant la ligne III - III de la Fig. 1, et
- la Fig. 4: montre une autre forme de réalisation du cadre de formage dans une vue en coupe suivant la ligne III - III de la Fig. 1.

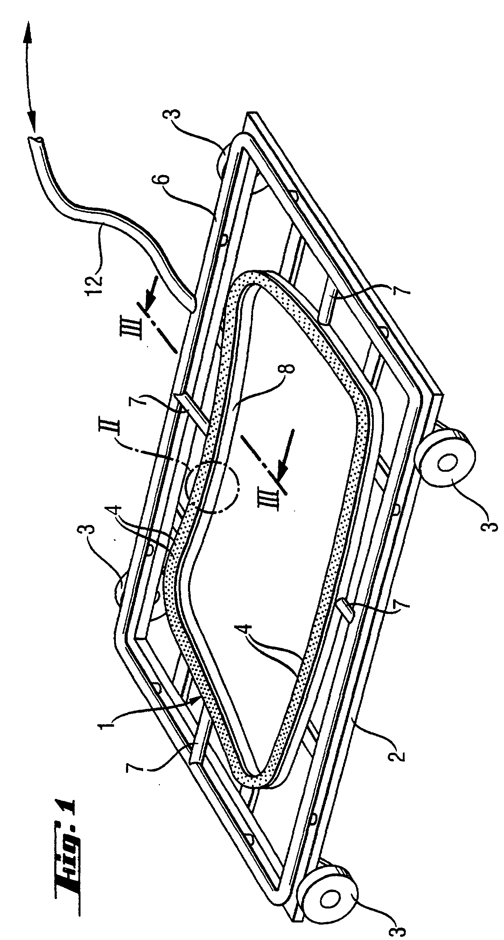

Comme le montre la Fig. 1, le cadre de formage 1 est monté sur un chariot 2 susceptible d'être déplacé sur rails au moyen de roues 3 à l'intérieur d'une installation de bombage et de trempe. Comme on peut également le constater à la Fig. 2, le cadre de formage 1 est un cadre percé d'orifices 4 destinés à l'amenée adéquate d'air comprimé. Les orifices 4 doivent avoir un diamètre d et un écartement a entre eux tels qu'une vitre 5 portée à la température de ramollissement ne puisse être déformée ni par son propre poids, ni par les forces qui s'exercent sur elle lors d'une opération de pressage. Le diamètre d des orifices 4 est, en fonction de l'épaisseur de la vitre à bomber et à tremper, par exemple de 1 à 10 mm, et l'écartement a entre les orifices 4 est, par exemple de 2 à 20 mm.

Dans l'exemple de réalisation représenté du cadre de formage, au moyen duquel une vitre d'une épaisseur de 3 mm doit être bombée et trempée, les orifices 4 présentent un diamètre de 2 mm et sont agencés sur trois rangées disposées en quinconce le long du périmètre du cadre de formage 1. Les centres des orifices 4 sont espacés de 6 mm l'un de l'autre dans chaque rangée, et les rangées elles-mêmes sont également séparées de 6 mm entre elles.

A l'extérieur du cadre de formage 1, une conduite circulaire 6 est montée sur le chariot 2, laquelle conduite est reliée en plusieurs endroits à un canal de distribution 8 par le biais de conduits de raccordement 7. Dans l'exemple illustré, le canal de distribution 8 se trouve directement sous le cadre de formage 1 et est relié à celui-ci par soudure. La conduite circulaire 6 est raccordée à une conduite d'air comprimé non représentée par le biais d'un tuyau flexible 12 en matériau résistant aux températures élevées.

Le cadre de formage 1 sert de forme de bombage de cadre de transport pour amener la vitre bombée au poste de trempe et de cadre de support pour la vitre durant l'opération de trempe. Pour le bombage par pressage d'une vitre, par exemple, la vitre portée à la température de bombage est tout d'abord amenée sur un transporteur à rouleaux dans un four de bombage sous une forme de bombage convexe, est positionnée sous la forme de bombage convexe et soulevée par un flux de gaz chaud dirigé du bas contre la vitre et est pressée contre la forme de bombage convexe. Le chariot 2 avec le cadre de formage 1 est ensuite amené dans une position située verticalement en dessous de la forme de bombage contre laquelle la vitre est maintenue par le flux de gaz chaud projeté vers le haut.

Dès que le cadre de formage se trouve dans la zone chaude du four, le tuyau flexible 12 est raccordé à une conduite de dépression, si bien que l'air chaud ambiant est aspiré à travers la surface d'appui du cadre de formage. Cette opération vise à porter la surface du cadre de formage à une température appropriée afin que le contact avec la vitre chaude ne provoque pas de choc thermique dommageable. Ensuite, tout en maintenant le flux de gaz chaud projeté vers le haut, la forme de bombage supérieure ainsi que la vitre sont abaissées sur le cadre de formage 1 de sorte que la vitre à l'aide du cadre de formage 1 est pressée à la forme souhaitée. La vitre est ensuite déposée sur le cadre de formage 1 par l'arrêt du flux de gaz chaud. La forme de bombage convexe supérieure est soulevée, et le chariot 2, avec le cadre de formage 1 et la vitre posée sur celui-ci, sont ensuite amenés au poste de trempe entre deux caissons de soufflage par lesquels la vitre est refroidie brutalement.

Pendant que la vitre 5 est trempée à l'air au moyen de caissons de soufflage traditionnels, le refroidissement brusque des zones superficielles de la vitre 5 recouvertes par le cadre de formage 1 se produit par l'amenée d'air comprimé par la conduite circulaire 6 dans le canal de distribution 8. L'air comprimé sortant du canal de distribution 8 est dirigé par les orifices 4 vers les zones de la vitre 5 recouvertes et soumet ces zones à un brusque refroidissement. Pour réaliser une trempe correcte dans la zone des bords de la vitre 5, une pression de, par exemple, 4 bars s'est avérée suffisante pour l'air comprimé amené.

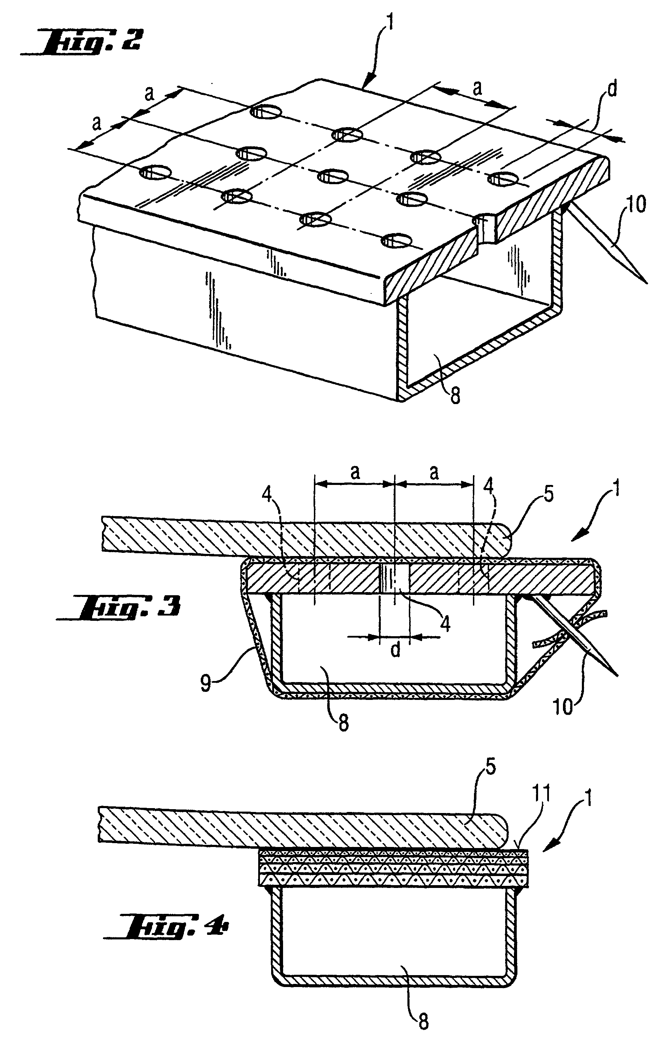

Pour le reste, le cadre de formage 1 est recouvert d'une manière connue d'un maillage de fibres métalliques 9 perméable au gaz fixé à des broches pointues 10, comme on peut le voir sur les Fig. 2 et 3.

Pour assurer l'isolation thermique du cadre de formage par rapport au canal de distribution 8, celui-ci peut être installé à une distance de 0,5 à 3 mm. Cette isolation thermique permet alors un chauffage et un refroidissement plus rapides du cadre de formage. Cela peut être avantageux, par exemple lorsque la durée du cycle d'une installation de bombage et de trempe est relativement courte.

La Fig. 4 représente une autre forme de réalisation du cadre de formage 1. Alors que le canal de distribution 8 est réalisé de la même manière que dans l'exemple précédent, le cadre de formage 1 se compose de pcadrex composites de toile métallique, qui sont disponibles sur le marché par exemple sous la marque commerciale "Haver Porostar®". Les panneaux composites de toile métallique de ce genre sont formés d'une pluralité d'épaisseurs de toiles métalliques en acier résistant aux températures élevées, assemblées solidement les unes aux autres par frittage. La sélection des toiles métalliques individuelles suivant le calibre des fils, l'écartement des fils et la forme des mailles permet de déterminer avec précision les caractéristiques des panneaux composites telles que la perméabilité au gaz, la porosité, la répartition des pores et la nature de la surface. La surface tournée vers la vitre 5 doit être aussi lisse que possible, c'est-à-dire formée d'une toile métallique dans laquelle les fils soient les plus fins possible et la largeur de maille soit faible. Par contre, les épaisseurs de toile métallique des couches sous-jacentes peuvent utilement présenter des mailles de plus en plus larges. La perméabilité au gaz est choisie telle que les mailles constituent les orifices du cadre de formage via lesquels les zones superficielles de la vitre 5 recouvertes par le cadre de formage subissent un refroidissement supplémentaire du fait de l'amenée d'air comprimé et l'air chaud ambiant est aspiré en vue du chauffage du cadre de formage 1.

En vue d'une meilleure isolation thermique, la surface du cadre de formage qui entre en contact avec la vitre 5 peut comporter un revêtement céramique 11 d'une épaisseur de 0,2 à 1 mm, qui est connu en soi. Le revêtement céramique 11 se compose de préférence de dioxyde de zirconium. Il peut être avantageux de déposer tout d'abord une couche d'accrochage sur la surface du cadre de formage. Une couche d'accrochage de ce genre peut par exemple consister en un alliage de nickel et d'aluminium ou de nickel, de chrome et d'aluminium. Tant la couche d'accrochage que le revêtement céramique sont avantageusement appliqués à l'aide du procédé de projection au plasma ou de métallisation à la flamme. Durant le procédé de revêtement, il convient de garantir que la perméabilité au gaz du cadre de formage 1 soit préservée. Cela peut être obtenu en réalisant le revêtement sur le cadre de formage fini, de l'air en surpression étant simultanément injecté dans le canal de distribution, et sortant par les orifices de la surface du cadre de formage pour empêcher ainsi que ces orifices ne s'obstruent durant l'opération de revêtement.

## Revendications

1. Procédé de bombage et de trempe d'une vitre, dans lequel la vitre portée à la température de bombage est bombée dans la forme voulue en position horizontale à l'aide d'un cadre de formage (1), et la surface entière des deux côtés de la vitre bombée (5) est ensuite refroidie brusquement sur ce cadre de formage (1), dans un poste de trempe qui suit le poste de bombage, par soufflage d'air froid à l'aide de caissons de soufflage munis de buses soufflantes, **caractérisé en ce que**, durant le refroidissement brusque de la surface entière de la vitre, les zones des bords de la vitre (5) recouvertes par le cadre de formage (1) sont soumises à un soufflage supplémentaire d'air froid par l'amenée adéquate, à des ouvertures (4) traversant le cadre de formage (1), d'air comprimé à une pression supérieure à la pression ambiante qui apparaît entre les caissons de soufflage.

2. Procédé suivant la revendication 1, **caractérisé en ce que** le cadre de formage (1) est chauffé par aspiration de l'air chaud ambiant, à travers les ouvertures (4) dont il est percé avant d'entrer en contact avec la vitre (5) portée à la température de bombage.

3. Cadre de formage (1) pour l'exécution du procédé suivant la revendication 1 ou 2, **caractérisé en ce qu'**un canal de distribution (8) apte à être raccordé à une conduite de gaz alternativement sous surpression ou sous dépression, est installé le long d'une partie au moins du périmètre du cadre de formage (1), et **en ce que**, du canal de distribution (8), des ouvertures (4) mènent, à travers le cadre de formage (1), jusqu'à la surface de celui-ci sur laquelle la vitre prend appui.

4. Cadre de formage (1) suivant la revendication 3, **caractérisé en ce que** le canal de distribution (8) est situé sous le cadre de formage (1)

5. Cadre de formage (1) suivant la revendication 3, **caractérisé en ce que** le canal de distribution (8), vu dans le sens radial, est disposé à l'extérieur du cadre de formage (1).

6. Cadre de formage (1) suivant les revendications 3 à 5, **caractérisé en ce que** le canal de distribution (8), reposant directement contre le cadre de formage (1), est relié à celui-ci.

7. Cadre de formage (1) suivant les revendications 3 à 5, **caractérisé en ce que** le canal de distribution (8) est disposé à une distance de 0,5 à 3 mm du cadre de formage (1) pour réaliser son isolation thermique par rapport à celui-ci.

8. Cadre de formage (1) suivant l'une quelconque des revendications 3 à 7, **caractérisé en ce que** le cadre de formage (1) consiste en une plaque métallique percée d'orifices (4).

9. Cadre de formage (1) suivant l'une quelconque des revendications 3 à 8, **caractérisé en ce que** le cadre de formage (1) consiste en un matériau composite, formé de toiles métalliques et perméable au gaz.

10. Cadre de formage (1) suivant la revendication 9, **caractérisé en ce que** le matériau composite formant le cadre de formage se compose de plusieurs toiles métalliques superposées et assemblées par frittage de différentes largeurs de mailles, la couche supérieure consistant en une toile à maillage très fin.

11. Cadre de formage (1) suivant l'une quelconque des revendications 3 à 10, **caractérisé en ce que** la surface du cadre de formage (1) sur laquelle la vitre (5) prend appui, est recouverte d'une texture maillée, tissée ou feutrée en fibres métalliques (9) résistant aux températures élevées et perméable au gaz dont les fibres élémentaires présentent un diamètre de 5 à 1 micromètres.

12. Cadre de formage (1) suivant l'une quelconque des revendications 3 à 11, **caractérisé en ce que** la surface d'appui de la vitre du cadre de formage (1) est recouverte d'un revêtement céramique (11) d'oxynitrure d'aluminium, d'oxynitrure de silicium et d'aluminium, de titanate d'aluminium ou de dioxyde de zirconium.

## Claims

1. Process for bending and tempering a glass, in which the glass is raised to the bending temperature and bent into the desired form in the horizontal position with the aid of a forming frame (1) and the entire surface of the two sides of the bent glass (5) is then suddenly cooled on said forming frame (1) in a tempering station following the bending station, by blowing cold air with the aid of blowing plenums equipped with blowing nozzles, **characterized in that**, during the sudden cooling of the entire surface of the glass, the edge regions of the glass (5) covered by the forming frame (1) undergo a supplementary blowing with cold air through the adequate supply, through openings (4) traversing the forming frame (1), of compressed air at a pressure above the ambient pressure appearing between the blowing plenums.

2. Process according to claim 1, **characterized in that** the blowing frame (1) is heated by the suction of ambient hot air through the openings (4) made therein before coming into contact with the glass (5) raised to the bending temperature.

3. Forming frame (1) for performing the process according to claim 1 or 2, **characterized in that** a distribution channel (8) connectable to a gas pipe alternately under an overpressure or vacuum is installed along at least part of the perimeter of the forming frame (1) and **in that**, from said distribution channel (8) openings (4) lead through the forming frame (1) to the surface thereof on which said glass is supported.

4. Forming frame (1) according to claim 3, **characterized in that** the distribution channel (8) is located below the forming frame (1).

5. Forming frame (1) according to claim 3, **characterized in that** the distribution channel (8), viewed in the radial direction, is placed outside the forming frame (1).

6. Forming frame (1) according to claims 3 to 5, **characterized in that** the distribution channel (8), resting directly against the forming frame (1), is connected to the latter.

7. Forming frame (1) according to claims 3 to 5, **characterized in that** the distribution channel (8) is placed at a distance of 0.5 to 3 mm from the forming frame (1) in order to provide thermal insulation with respect thereto.

8. Forming frame (1) according to any one of the claims 3 to 7, **characterized in that** the forming frame (1) consists of a metal plate having openings (4).

9. Forming frame (1) according to any one of the claims 3 to 8, **characterized in that** the forming frame (1) consists of a composite material formed from gas-permeable wire gauzes.

10. Forming frame (1) according to claim 9, **characterized in that** the composite material forming the forming frame is constituted by several superimposed wire gauzes, assembled by sintering and with different mesh widths, the upper layer consisting of a very fine mesh width gauze.

11. Forming frame (1) according to any one of the claims 3 to 10, **characterized in that** the surface of the forming frame (1) on which rests the glass (5) is covered with a meshed, woven or felted, metal fibre texture (9) resistant to high temperatures and permeable to gas and whose elementary fibres have a diameter between 5 and 1 micrometres.

12. Forming frame (1) according to any one of the claims 3 to 11, **characterized in that** the glass bearing surface of the forming frame (1) is covered with a ceramic coating (11) of aluminium oxynitride, silicon and aluminium oxynitride, aluminium titanate or zirconium dioxide.

## Patentansprüche

1. Verfahren zum Biegen und Vorspannen einer Glasscheibe, bei dem die auf Biegetemperatur erwärmte Glasscheibe in horizontaler Lage mit Hilfe eines Formrings (1) in die gewünschte Form gebogen, und die gebogene Glasscheibe (5) auf diesem Formring (1) in einer sich an die Biegestation anschließenden Vorspannstation durch Aufblasen von Kühlluft mit Hilfe -von mit Blasdüsen versehenen Blaskästen beidseitig ganzflächig schroff abgekühlt wird, **dadurch gekennzeichnet, dass** während der ganzflächigen schroffen Abkühlung der Glasscheibe die von dem Formring (1) abgedeckten Randbereiche der Glasscheibe (5) durch gezielte Zufuhr von Druckluft zu den Formring (1) durchdringenden Öffnungen (4) mit einem gegenüber dem zwischen den Blaskästen entstehenden Umgebungsdruck erhöhten Druck zusätzlich mit Kühlluft beaufschlagt werden.

2. Verfahren nach Anspruch 1, **dadurch gekennzeichnet, dass** der Formring (1) vor dem Kontakt mit der auf Biegetemperatur erwärmten Glasscheibe (5) durch Ansaugen heißer Umgebungsluft durch die ihn durchdringenden Öffnungen (4) hindurch aufgeheizt wird.

3. Formring (1) zur Durchführung des Verfahrens nach Anspruch 1 oder 2, **dadurch gekennzeichnet, dass** zumindest entlang eines Teils des Umfangs des Formrings (1) ein an eine unter Überdruck oder unter Unterdruck stehende Gasleitung anschließbarer Verteilerkanal (8) angeordnet ist, und dass von dem Verteilerkanal (8) Öffnungen (4) durch den Formring (1) zu dessen Glasauflagefläche führen.

4. Formring (1) nach Anspruch 3, **dadurch gekennzeichnet, dass** der Verteilerkanal (8) unterhalb des Formrings (1) angeordnet ist.

5. Formring (1) nach Anspruch 3, **dadurch gekennzeichnet, dass** der Verteilerkanal (8), in radialer Richtung gesehen, außerhalb des Formrings (1) angeordnet ist.

6. Formring (1) nach einem der Ansprüche 3 bis 5, **dadurch gekennzeichnet, dass** der Verteilerkanal (8) unmittelbar an dem Formring (1) anliegend mit diesem verbunden ist.

7. Formring (1) nach einem der Ansprüche 3 bis 5, **dadurch gekennzeichnet, dass** der Verteilerkanal (8) unter thermischer Trennung von dem Formring (1) in einem Abstand von 0,5 bis 3 mm an diesem angeordnet ist.

8. Formring (1) nach einem der Ansprüche 3 bis 7, **dadurch gekennzeichnet, dass** der Formring (1) aus einer mit Lochbohrungen (4) versehenen Metallleiste besteht.

9. Formring (1) nach einem der Ansprüche 3 bis 8, **dadurch gekennzeichnet, dass** der Formring (1) aus einem gasdurchlässigen Metall-Drahtgewebe-Verbundwerkstoff besteht.

10. Formring (1) nach Anspruch 9, **dadurch gekennzeichnet, dass** der den Formring (1) bildende Verbundwerkstoff aus mehreren übereinander angeordneten, zusammengesinterten Drahtgewebelagen verschiedener Maschenweite besteht, wobei die oberste Lage von einem sehr feinmaschigen Drahtgewebe gebildet wird.

11. Formring (1) nach einem der Ansprüche 3 bis 10, **dadurch gekennzeichnet, dass** der Formring (1) auf seiner Glasauflagefläche mit einem hitzebeständigen und für Gas durchlässigen Gewirk, Gewebe oder filzähnlichen Material aus Metallfasern (9), deren Elementarfasern einen Durchmesser von 5 bis 1 Mikrometer aufweisen, überzogen ist.

12. Formring (1) nach einem der Ansprüche 3 bis 11, **dadurch gekennzeichnet, dass** der Formring (1) auf seiner Glasauflagefläche mit einer keramischen Beschichtung (11) aus Aluminiumoxinitrid, Siliciumaluminiumoxinitrid, Aluminiumtitanat oder Zirkondioxid versehen ist.
